# EUROPÄISCHE PATENTANMELDUNG

(11) **EP 3 156 442 A1**
(43) Veröffentlichungstag der Anmeldung: **19.04.2017**
(21) Anmeldenummer: 16192511.0
(22) Anmeldetag: 06.10.2016
(51) Int. Cl.: C08K 5/103

(54) **ZUSAMMENSETZUNG**

(30) Priorität: 14.10.2015 DE 202015105425 U
(71) Anmelder: REHAU AG + Co, 95111 Rehau (DE)
(72) Erfinder: Wazlawik, Klaus, 95030 Hof (DE); Hübner, Christian, 95466 Weidenberg (DE); Nachtrab, Markus, 91596 Burk (DE)

(57) **Zusammenfassung**

Die Erfindung betrifft eine Zusammensetzung (1), umfassend wenigstens ein thermoplastisches, chlorhaltiges Polymermaterial, wenigstens einen Stabilisator und wenigstens einen Weichmacher, die sich dadurch auszeichnet, dass der Weichmacher ausgewählt ist aus einem Tetraester des Pentaerythrits mit verzweigten oder unverzweigten Monocarbonsäuren, die zwei bis sieben Kohlenstoffatome im Molekül aufweisen.

## Beschreibung

Die Erfindung betrifft eine Zusammensetzung, die ein thermoplastisches, chlorhaltiges Polymermaterial, einen Stabilisator und einen Weichmacher enthält.

Weiterhin betrifft die Erfindung einen Artikel, der aus seiner solchen Zusammensetzung besteht, bzw. eine solche Zusammensetzung enthält.

Zusammensetzungen, die ein thermoplastisches, chlorhaltiges Polymermaterial, einen Stabilisator und einen Weichmacher enthalten, sind aus dem Stand der Technik bekannt. Sie werden im Allgemeinen dafür verwendet, Artikel herzustellen, die bestimmten technischen Anforderungen genügen und beispielsweise aufgrund des Weichmachergehalts in der Zusammensetzung eine bestimmte Härte bzw. Elastizität aufweisen. Anwendungen finden solche Artikel beispielsweise als Schläuche, als Dichtungen, als Behältnisse und dergleichen mehr.

Insbesondere sind aus dem Stand der Technik solche Weichmaterialien bekannt, die mit Weichmachern auf Basis von Phthalsäure-Diestern (Phthalaten) oder aber auch mit phthalatfreien Weichmachern hergestellt sind. Nachteilig an diesem Stand der Technik ist, dass große Mengen an Weichmachern benötigt werden, um eine ausreichende Flexibilität und gleichzeitig eine hohe Wärmefestigkeit zu erreichen. Hier sind beispielsweise Mengenanteile im Bereich > 30 Gew.-% an Weichmachern in der Zusammensetzung notwendig, um die gewünschten Eigenschaftsprofile zu erhalten.

Hier setzt die Erfindung ein, die es sich zur Aufgabe gemacht hat, eine Zusammensetzung zur Verfügung zu stellen, die einen erheblich reduzierten Weichmacheranteil aufweist, bei sonst vergleichbaren technischen Eigenschaften.

Eine weitere Aufgabe der vorliegenden Erfindung ist es, einen Artikel bereitzustellen, der aus einer derartigen Zusammensetzung besteht, bzw. eine derartige Zusammensetzung enthält.

Die Lösung der Aufgabe, eine Zusammensetzung zur Verfügung zu stellen, erfolgt gemäß Anspruch 1.

Im Rahmen der vorliegenden Erfindung wurde erkannt, dass die Zusammensetzung, umfassend wenigstens ein thermoplastisches, chlorhaltiges Polymermaterial, wenigstens einen Stabilisator und wenigstens einen Weichmacher, dadurch ausgezeichnet ist, dass der Weichmacher ausgewählt ist aus einem Tetraester des Pentaerythrits mit verzweigten oder unverzweigten Monocarbonsäuren, die zwei bis sieben Kohlenstoffatome im Molekül aufweisen.

Mit einer derartigen erfindungsgemäßen Zusammensetzung ist es möglich, den Einsatz an Weichmacher erheblich im Vergleich zur benötigen Menge an Phthalatestern zu reduzieren, wobei das gleiche Eigenschaftsniveau im Hinblick auf technische Werte der Zusammensetzung erreicht wird.

Weiterhin ist durch die Reduktion des Weichmacheranteils ein erheblichen Kostenvorteil bei der Bereitstellung der Zusammensetzung gegeben, überdies erfolgt durch den Einsatz der erfindungsgemäßen Zusammensetzung eine geringere Umweltbelastung durch den - verringerten - weichmacherhaltigen Abfall am Lebenszyklusende des jeweiligen Artikels.

Bei der vorliegenden Erfindung ist der Weichmacher ausgewählt aus einem Tetraester des Pentaerythrits mit verzweigten oder unverzweigten Monocarbonsäuren, die zwei bis sieben Kohlenstoffatome im Molekül aufweisen.

Die vier verzweigten oder unverzweigten Monocarbonsäurereste, die im Tetraester des Pentaerythrits enthalten sind, können dabei gleich oder ungleich sein.

Es ist also möglich, einen Tetraester des Pentaerythrits auszuwählen, der vier gleiche verzweigte oder unverzweigte Monocarbonsäurereste aufweist, oder jeweils unterschiedliche verzweigte oder unverzweigte Monocarbonsäurereste enthält.

Auf diese Weise ist eine breite Variationsmöglichkeit gegeben, den Tetraester des Pentaerythrits quasi maßgeschneidert für die jeweilige Verwendung auszulegen.

Es hat sich im Rahmen der Erfindung als vorteilhaft erwiesen, wenn die Zusammensetzung derartig gewählt ist, dass die Monocarbonsäuren ausgewählt sind aus solchen die vier, fünf oder sechs Kohlenstoffatome im Molekül aufweisen.

Durch diese Auswahl sind Tetraester des Pentaerythrits zugänglich, die besonders vorteilhaft für die Zusammensetzung einsetzbar sind. Tetraester des Pentaerythrits mit Monocarbonsäuren die vier, fünf oder sechs Kohlenstoffatome im Molekül aufweisen, eignen sich besonders gut dazu, als Weichmacher in der Zusammensetzung eingesetzt zu werden, da diese nur eine sehr geringe Migrationsneigung aufweisen, und dabei die Zusammensetzung insbesondere bei geringer Zugabemenge entsprechend flexibel machen.

Es hat sich bei der vorliegenden Erfindung als sehr vorteilhaft herausgestellt, wenn der Anteil an Weichmacher in der Zusammensetzung zwischen 20 und 40 Gew.-% beträgt. Bei einem Anteil von 20 bis 40 Gew.-% Weichmacher in der Zusammensetzung wird eine besonders vorteilhafte Einstellung der Werkstoffkennwerte der Zusammensetzung erreicht.

Als thermoplastisches, chlorhaltiges Polymermaterial eignet sich erfindungsgemäß ein Polyvinylchlorid (PVC), ein chloriertes Polyethylen, deren Copolymere, Mischungen und Mischzusammensetzungen mit weiteren geeigneten Polymeren.
Bevorzugt ist im Erfindungszusammenhang der Einsatz von Polyvinylchlorid (PVC) in der Zusammensetzung.

Es hat sich als sehr günstig im Rahmen der vorliegenden Erfindung herausgestellt, wenn die Zusammensetzung noch wenigstens einen Füllstoff, ausgewählt aus Kreide, Calcium-sulfat, Calciumcarbonat, Calciumoxid, Magnesiumoxid, Aluminium- oder Magnesiumhydroxid, Dolomit, Bariumsulfat, Silikat, Kieselsäure, Ruß, Graphit, Talkum, Zinkoxid, Glas, Ton, Kaolin, und / oder wenigstens ein Gleitmittel und / oder wenigstens ein Pigment und / oder wenigstens ein Schaumbildungsmittel umfasst.

Durch die Auswahl der vorgenannten Füllstoffe bzw. des Treibmittels bzw. des Pigments bzw. des Schaumbildungsmittels kann die Zusammensetzung je nach den Kundenwünschen bzw. technischen Notwendigkeiten sehr exakt maßgeschneidert werden, sodass eine breite Variationsmöglichkeit für die derart zur Verfügung gestellten Zusammensetzungen gegeben ist.

Bei der vorliegenden Erfindung hat es sich als sehr brauchbar erwiesen, wenn der Stabilisator ausgewählt ist aus einem solchen, der die Zusammensetzung hinsichtlich des durch Wärme- und / oder durch Lichteinwirkung bedingten Abbaus schützt, wobei der Stabilisator bevorzugt ein Calcium/Zink-Stabilisator ist, der aus einem Gemisch aus organischen und / oder anorganischen Verbindungen von Calcium und Zink besteht.

Es sind natürlich auch andere Stabilisatoren möglich, die sowohl gegen den durch Wärmeeinwirkung bedingten Abbau wie auch gegen den durch Lichteinwirkung bedingten Abbau die Zusammensetzung effektiv schützen. Hierzu sind insbesondere sogenannte HALS-Stabilisatoren und / oder organische UV-Absorber geeignet.

Es ist auch möglich, dass in der Zusammensetzung ein Stabilisatorpaket, das mehrere Stabilisatoren umfasst, enthalten ist.

Durch die Maßnahmen der vorliegenden Erfindung ist es möglich, dass die Zusammensetzung derartig ausgebildet ist, dass diese eine Härte gemäß Shore A nach ISO 868 bei 3 s. Ablesezeit von 60 bis 85 aufweist. Durch die Menge an Weichmacher in der erfindungsgemäßen Zusammensetzung kann die Härte gemäß Shore A in dem genannten Bereich eingestellt werden, sodass die technischen Anforderungen bzw. die Kundenwünsche genau eingehalten werden können.

Es hat sich im Rahmen der vorliegenden Erfindung als sehr günstig erwiesen, wenn der Gewichtsanteil an Weichmacher in der Zusammensetzung das 0,5 bis 0,9-fache des Gewichtsanteils an thermoplastischem, chlorhaltigem Polymermaterial beträgt. Durch diese Maßnahme ist es möglich, die Zusammensetzung je nach den vorliegenden Erfordernissen genau einzustellen.

Die Aufgabe der vorliegenden Erfindung, einen Artikel anzugeben, der aus der vorstehend beschriebenen Zusammensetzung besteht oder eine solche enthält, erfährt ihre Lösung in Anspruch 8.

Es wurde im Rahmen der vorliegenden Erfindung erkannt, dass ein Artikel dann in sehr vorteilhafter Weise zur Verfügung gestellt werden kann, wenn dieser aus der vorstehend beschriebenen Zusammensetzung besteht oder eine solche enthält.

Ein solcher Artikel kann in Form eines Schlauches, insbesondere eines ein- oder mehrschichtigen Schlauches, einer Dichtung, eines Profils, eines Haftverbundes mit einem thermoplastischen Polymermaterial von höherer Härte, einer Lippe, einer Platte, eines Mehrschichtverbundes, eines Behälters oder eines Hohlkörpers vorliegen.

Die vorgenannten Artikel finden eine breite Anwendung in unterschiedlichen technischen Bereichen, wie beispielsweise dem Automobilbau, der Leitung, Aufnahme und Speicherung von Fluiden, der Anwendungen in Kühl- und Gefriergeräten, im Fensterbau, im Maschinenbau und dergleichen.

Ganz besonders bevorzugt ist ein solcher Artikel in Form eines Schlauches ausgebildet. Dieser kann ein- oder mehrschichtig gebildet sein.

Bevorzugt ist ein Schlauch, dessen Wandung eine erste Schicht aufweist, die das Lumen des Schlauches begrenzt, die eine Zusammensetzung wie vorstehend beschrieben enthält. Auf der ersten Schicht ist eine Verstärkungsschicht angeordnet, die beispielsweise in Form einer Umwicklung oder Umflechtung mit einem Faden, einem Filament oder einem Garn, einer Fadenschar, einem Gelege, einem Gestrick oder dergleichen ausgebildet ist, wobei auf der Verstärkungsschicht eine zweite Schicht angeordnet ist, die die äußere Schicht der Wandung des Schlauches bildet, die eine Zusammensetzung wie vorstehend beschrieben enthält.

Hierbei kann die Zusammensetzung der ersten Schicht gleich oder ungleich sein zur Zusammensetzung der zweiten Schicht.

Ein derartiger Schlauch ist im ganz besonderen Maße geeignet, als Wasserschlauch für die Bewässerungstechnik, beispielsweise im Garten, in der Landwirtschaft, in Schwimmbädern, als Schlauch in verschiedenen industriellen Anwendungen, als Schlauch in der Lebensmittelindustrie und in anderen Bereichen eingesetzt zu werden.

Ein solcher mehrschichtig ausgebildeter Schlauch ist daher sehr vorteilhaft.

Der mehrschichtige Schlauch der vorliegenden Erfindung lässt sich in besonders vorteilhafter Weise ausbilden, wenn vorgesehen ist, dass wenigstens eine Verstärkungsschicht auf einer Schicht oder in einer Schicht angeordnet ist.

Durch das Vorsehen einer Verstärkungsschicht kann der mehrschichtige Schlauch besonders druckfest ausgelegt werden.

Als Verstärkungselemente zur Bildung der Verstärkungsschicht sind beispielsweise Filamente oder Fäden einsetzbar, mit denen eine Umflechtung vorgenommen wird, sodass die Verstärkungsschicht auf einer Schicht oder in einer Schicht angeordnet ist.

Als Filamente oder Fäden zur Verstärkung eignen sich insbesondere Polymermaterialien, wie Aramid, Polyethylenterephthalat, Polyamid, Polyacrylnitril, Cellulose, Polyolefine (unvernetzt oder vernetzt), als anorganische Filamente oder Fasern solche aus Kohlenstoff, Glas oder Edelstahl. Auch Naturfasern können zur Verstärkung eingesetzt werden, diese umfassen Polysaccharide, Regeneratfasern, Modalfasern und Spinnenseide.

In besonders bevorzugter Weise ist die Verstärkungsschicht auf einer Schicht durch einen Diagonal-Wickelprozess hergestellt, wobei die Verstärkungsschicht beispielsweise im CoExtrusionsverfahren mit einer weiteren Schicht überzogen ist, wodurch die Verstärkungsschicht in der Wandung des mehrschichtigen Schlauches eingebettet ist.

In einer günstigen Weiterbildung der vorliegenden Erfindung kann vorgesehen sein, dass der mehrschichtige Schlauch eine Schutzschicht aufweist, die als äußerste Schicht auf dem mehrschichtigen Schlauch angeordnet ist. Diese Schutzschicht kann ein thermoplastisches Polymermaterial enthalten oder aus einem thermoplastischen Polymermaterial bestehen. In bevorzugter Weise ist die Schutzschicht aus einem Polyvinylchlorid oder einem Polyolefin, insbesondere aus Polyethylen, das unvernetzt, teilvernetzt oder vernetzt vorliegt, gebildet.

Eine Schutzschicht schützt den mehrschichtigen Schlauch insbesondere bei der Herstellung, der Lagerung, dem Verlegen und dem Dauergebrauch vor Beschädigungen und kann somit die Einsatzdauer und den Betrieb sowie die Nutzung des Schlauches über einen langen Zeitraum sicherstellen.

Der erfindungsgemäße Schlauch kann in weiteren Fortbildungen auch noch um Schichten ergänzt werden, die beispielsweise Diffusionsperrschichten, Indikatorschichten, Wärmeschutzschichten, und dergleichen darstellen. Auf diese Weise kann der Schlauch in vielfältiger Art gestaltet sein und ist so für die unterschiedlichsten Einsatzzwecke geeignet.

Die Vorteile der vorliegenden Erfindung werden anhand eines Ausführungsbeispiels näher erläutert:

Hierzu wird ein Schlauch aus dem Stand der Technik mit einem erfindungsgemäßen Schlauch verglichen.

Als Schlauch aus dem Stand der Technik wird ein zweischichtiger Schlauch aus Polyvinylchlorid, der einen Innendurchmesser von 12,20 Millimeter und eine Wanddicke von 2,50 Millimeter aufweist, herangezogen.

Material der ersten Schicht, die das Lumen des Schlauches umgibt:

### (I) Zusammensetzung nach dem Stand der Technik

| | |
|---|---|
| S-PVC, K-Wert 70 | 45,0 Gew.-% |
| Weichmacher | DINP-Weichmacher 30,0 Gew.-% |
| Füllstoff Kreide | 23,0 Gew.-% |
| Ca/Zn-Stabilisator | 1,0 Gew.-% |
| Gleitmittel und Pigmente | 1,0 Gew.-% |

| | |
|---|---|
| DINP = Diisononylphthalat (Phthalat-Weichmacher) | |

### (II) Erfindungsgemäße Zusammensetzung

| | |
|---|---|
| S-PVC, K-Wert 70 | 46,4 Gew.-% |
| Weichmacher | Tetraester des Pentaerythrits 27,0 Gew.-% |
| Füllstoff Kreide | 24,3 Gew.-% |
| Ca/Zn-Stabilisator | 1,15 Gew.-% |
| Gleitmittel und Pigmente | 1,15 Gew.-% |

Mechanischer Kennwert
Härte Shore A nach ISO 868, 3 s Ablesezeit

### (I) Zusammensetzung nach dem Stand der Technik

80

### (II) Erfindungsgemäße Zusammensetzung

80

Der Weichmacheranteil in der erfindungsgemäßen Zusammensetzung ist gegenüber der Zusammensetzung nach dem Stand der Technik bei gleicher erreichter Härte Shore A um 10 % reduziert.

Material der zweiten Schicht, die auf der ersten Schicht des Schlauches angeordnet ist:

### (III) Zusammensetzung nach dem Stand der Technik

| | |
|---|---|
| S-PVC, K-Wert 70 | 45,0 Gew.-% |
| Weichmacher | DINP-Weichmacher 42,5 Gew.-% |
| Füllstoff Kreide | 9,5 Gew.-% |
| Ca/Zn-Stabilisator | 1,0 Gew.-% |
| Gleitmittel und Pigmente | 1,0 Gew.-% |

### (IV) Erfindungsgemäße Zusammensetzung

| | |
|---|---|
| S-PVC, K-Wert 70 | 47,4 Gew.-% |
| Weichmacher | Tetraester des Pentaerythrits 39,5 Gew.-% |
| Füllstoff Kreide | 10,8 Gew.-% |
| Ca/Zn-Stabilisator | 1,15 Gew.-% |
| Gleitmittel und Pigmente | 1,15 Gew.-% |

Mechanischer Kennwert
Härte Shore A nach ISO 868, 3 s Ablesezeit

### (III) Zusammensetzung nach dem Stand der Technik

65

### (IV) Erfindungsgemäße Zusammensetzung

65

Der Weichmacheranteil in der erfindungsgemäßen Zusammensetzung ist gegenüber der Zusammensetzung nach dem Stand der Technik bei gleicher erreichter Härte Shore A um 7,1 % reduziert.

Durch die vorliegende Erfindung ist es möglich, den Anteil an Weichmacher in einer Zusammensetzung erheblich zu verringern bei gleicher Härte Shore A der Zusammensetzung.

Weitere wichtige Merkmale und Vorteile der Erfindung ergeben sich aus den Unteransprüchen, aus der Figur und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Figur dargestellt und wird in der nachfolgenden Beschreibung näher erläutert.

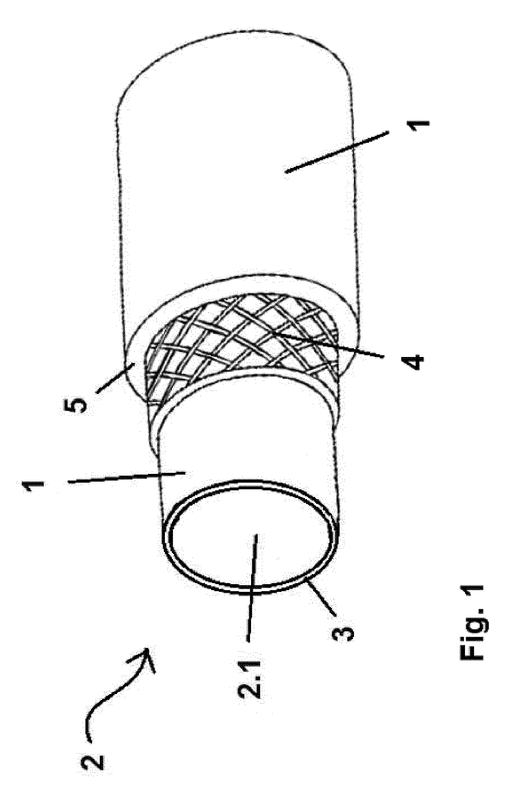

Hierzu zeigt
- Fig. 1: eine teilweise geschnittene perspektivische Ansicht eines mehrschichtigen Schlauches.

In der Figur 1 ist in einer teilweise geschnittenen perspektivischen Ansicht ein mehrschichtiger Schlauch 2 gemäß vorliegender Erfindung gezeigt.

Der mehrschichtige Schlauch 2 weist eine Wandung auf, die die verschiedenen Schichten des mehrschichtigen Schlauches 2 umfasst.

Das Lumen 2.1 des mehrschichtigen Schlauches 2 wird dabei von der ersten Schicht 3 der Wandung begrenzt.

Auf der Außenoberfläche der ersten Schicht 3 der Wandung des mehrschichtigen Schlauches 2 ist eine Verstärkungsschicht 4 angeordnet.
Die Verstärkungsschicht 4 wird gebildet durch ein Geflecht bzw. eine Wickelarmierung von Fäden aus einem Polymermaterial.
Die Verstärkungsschicht 4 bewirkt eine hohe Druckfestigkeit des mehrschichten Schlauches 2.

Optional kann zwischen der ersten Schicht 3 und der Verstärkungsschicht 4 eine Haftvermittlerschicht - die hier nicht gezeigt ist - vorgesehen sein.
Eine solche Haftvermittlerschicht weist eine geringe Dicke im Bereich von einem bis wenigen Mikrometern auf.
Die Haftvermittlerschicht kann zu einer verbesserten Haftung zwischen der Verstärkungsschicht 4 und der ersten Schicht 3 beitragen.

In einem Coextrusionsverfahren ist die zweite Schicht 5 auf die Verstärkungsschicht 4 aufgetragen, wobei es zu einer Haftung der zweiten Schicht 5 auf den Fäden der Verstärkungsschicht 4 kommt, soweit diese untereinander chemisch verträglich sind bzw. die Fäden der Verstärkungsschicht 4 haftungsmodifiziert sind.

Weiterhin kommt es zu einer Haftung der zweiten Schicht 5 durch die Freiräume im Geflecht bzw. der Wickelarmierung der Verstärkungsschicht 4, sodass erste Schicht 3 und zweite Schicht 5 zumindest in Abschnitten in Kontakt kommen.
Die Haftung zwischen den beiden Schichten 3 und 5 ist so sichergestellt.

Auf dem mehrschichtigen Schlauch 2 gemäß vorliegender Erfindung kann optional als äußerste Schicht eine Schutzschicht - die hier nicht gezeigt ist - angeordnet sein. Die Schutzschicht enthält ein Polymermaterial, wie beispielsweise Polyvinylchlorid oder Polyethylen.

Die Schutzschicht kann den mehrschichtigen Schlauch 2 vor Beschädigungen bei der Herstellung, beim Transport, bei der Lagerung und beim Installieren und im Einsatz bewahren.

Die in der Fig. 1 angedeuteten Dicken der einzelnen Schichten 3, 4 und 5 des mehrschichtigen Schlauches 2 sind nur schematisch zu sehen. Die Dicken der einzelnen Schichten 3, 4 und 5 des mehrschichtigen Schlauches 2 orientieren sich an den Vorgaben oder den Notwendigkeiten, die der Kunde vorgibt, beziehungsweise an den technischen Erfordernissen, soweit beispielsweise technische Vorschriften und Regelwerke dies vorgeben.

Der mehrschichtige Schlauch 2 der vorliegenden Erfindung kann in einem Extrusions-/Co-Extrusionsverfahren in beliebiger Länge preisgünstig hergestellt werden.

### Bezugszeichenliste

- 1: Zusammensetzung
- 2: Schlauch
- 2.1: Lumen
- 3: erste Schicht
- 4: Verstärkungsschicht
- 5: zweite Schicht

## Patentansprüche

1. Zusammensetzung (1), umfassend wenigstens ein thermoplastisches, chlorhaltiges Polymermaterial, wenigstens einen Stabilisator und wenigstens einen Weichmacher, **dadurch gekennzeichnet, dass** der Weichmacher ausgewählt ist aus einem Tetraester des Pentaerythrits mit verzweigten oder unverzweigten Monocarbonsäuren, die zwei bis sieben Kohlenstoffatome im Molekül aufweisen.

2. Zusammensetzung (1) nach Anspruch 1, **dadurch gekennzeichnet, dass** die Monocarbonsäuren ausgewählt sind aus solchen, die vier, fünf oder sechs Kohlenstoffatome im Molekül aufweisen.

3. Zusammensetzung (1) nach Anspruch 1 oder 2, **dadurch gekennzeichnet, dass** der Anteil an Weichmacher in der Zusammensetzung (1) zwischen 20 und 40 Gew.-% beträgt.

4. Zusammensetzung (1) nach einem der vorangehenden Ansprüche, **dadurch gekennzeichnet, dass** diese noch wenigstens einen Füllstoff, ausgewählt aus Kreide, Calciumsulfat, Calciumcarbonat, Calciumoxid, Magnesiumoxid, Aluminium- oder Magnesiumhydroxid, Dolomit, Bariumsulfat, Silikat, Kieselsäure, Ruß, Graphit, Talkum, Zinkoxid, Glas, Ton, Kaolin, und / oder wenigstens ein Gleitmittel und / oder wenigstens ein Pigment und / oder wenigstens ein Schaumbildungsmittel umfasst.

5. Zusammensetzung (1) nach einem der vorangehenden Ansprüche, **dadurch gekennzeichnet, dass** der Stabilisator ausgewählt ist aus einem solchen, der die Zusammensetzung hinsichtlich des durch Wärme- und / oder durch Lichteinwirkung bedingten Abbaus schützt, wobei der Stabilisator bevorzugt ein Calcium/Zink-Stabilisator ist.

6. Zusammensetzung (1) nach einem der vorangehenden Ansprüche, **dadurch gekennzeichnet, dass** diese eine Härte gemäß Shore A nach ISO 868 bei 3 s Ablesezeit von 60 bis 85 aufweist.

7. Zusammensetzung (1) nach einem der vorangehenden Ansprüche, **dadurch gekennzeichnet, dass** der Gewichtsanteil an Weichmacher in der Zusammensetzung (1) das 0,5- bis 0,9-fache des Gewichtsanteils an thermoplastischem, chlorhaltigem Polymermaterial beträgt.

8. Artikel, der aus einer Zusammensetzung (1) nach einem der Ansprüche 1 bis 7 besteht oder eine solche enthält.

9. Artikel nach Anspruch 8 in Form eines Schlauches (2), insbesondere eines ein- oder mehr-schichtigen Schlauches (2), einer Dichtung, eines Profils, eines Haftverbundes mit einem thermoplastischen Polymermaterial von höherer Härte, einer Lippe, einer Platte, eines Mehrschichtverbundes, eines Behälters, eines Hohlkörpers.

10. Artikel in Form eines Schlauches (2) nach Anspruch 9, **dadurch gekennzeichnet, dass** dessen Wandung eine erste Schicht (3) aufweist, die das Lumen (2.1) des Schlauches (2) begrenzt, die eine Zusammensetzung (1) nach einem der Ansprüche 1 bis 7 enthält, eine auf der ersten Schicht (3) angeordnete Verstärkungsschicht (4), und eine auf der Verstärkungsschicht (4) angeordnete zweite Schicht (5), die die äußere Schicht der Wandung des Schlauches (2) bildet, die eine Zusammensetzung (1) nach einem der Ansprüche 1 bis 7 enthält.
